# EUROPÄISCHE PATENTANMELDUNG

(11) **EP 4 782 317 A1**
(43) Veröffentlichungstag der Anmeldung: **29.07.2026**
(21) Anmeldenummer: 26154337.5
(22) Anmeldetag: 27.01.2026
(51) Int. Cl.: B62M 6/45

(54) **ANTRIEBSEINHEIT FÜR EIN ZUMINDEST TEILWEISE MIT EINER MUSKELKRAFT ANTREIBBARES FAHRZEUG UND FAHRZEUG MIT EINER SOLCHEN ANTRIEBSEINHEIT**

(30) Priorität: 27.01.2025 DE 102025102713
(71) Anmelder: Schaeffler Technologies AG & Co. KG, 91074 Herzogenaurach (DE)
(72) Erfinder: Mannsperger, Ralf, 91074 Herzogenaurach (DE); Becker, Leon, 91074 Herzogenaurach (DE)
(74) Vertreter: Schaeffler Technologies

(57) **Zusammenfassung**

Die Erfindung betrifft eine Antriebseinheit für ein zumindest teilweise mit einer Muskelkraft antreibbares Fahrzeug (1), aufweisend eine erste elektrische Maschine (2), die über ein Getriebe (3) mit einer Tretkurbelwelle (4) antriebswirksam verbunden ist, wobei die erste elektrische Maschine (2) dazu eingerichtet ist, mit elektrischer Energie aus einem Energiespeicher (5) als Elektromotor betrieben zu werden, um einen Benutzer beim Pedalieren zu unterstützen, und über die Tretkurbelwelle (4) angetrieben und als Generator betrieben zu werden, um elektrische Energie zum Betrieb einer zweiten elektrischen Maschine (6), die dazu eingerichtet ist, mit einem Antriebsrad (8) des Fahrzeugs (1) antriebswirksam verbunden zu sein, zu erzeugen. Ferner betrifft die Erfindung ein Fahrzeug (1), das zumindest teilweise mit einer Muskelkraft antreibbar ist, umfassend zumindest zwei Räder und eine solche Antriebseinheit.

## Beschreibung

Die Erfindung betrifft eine Antriebseinheit für ein zumindest teilweise mit einer Muskelkraft antreibbares Fahrzeug. Ferner betrifft die Erfindung ein Verfahren zum Betrieb einer solchen Antriebseinheit und ein Fahrzeug mit einer solchen Antriebseinheit. Insbesondere ist das Fahrzeug als E-Bike ausgebildet und weist mindestens zwei Räder auf.

Zumindest teilweise muskelbetriebene Fahrzeuge, beispielsweise Fahrräder mit einem Hilfsantrieb, sind aus dem Stand der Technik als E-Bikes oder Elektrofahrräder bekannt. Ein Elektrofahrrad ist ein Fahrrad mit einer als Antriebsmotor ausgebildeten elektrischen Maschine. Ein mit dem Antriebsmotor zusammenwirkender Energiespeicher liefert die benötigte elektrische Energie zum Betrieb des Antriebsmotors. Weiterhin sind Fahrräder bekannt, die keine mechanische Verbindung zwischen der Tretkurbelwelle und dem Antriebsrad aufweisen, sondern eine weitere elektrische Maschine, die als Pedalgenerator zur Erzeugung von elektrischer Energie ausgebildet ist und nach deren Maßgabe der Antriebsmotor betrieben wird.

Der zur Aufnahme der elektrischen Leistung und Fahrbefehle des Fahrers eingesetzte Pedalgenerator ist gegenüber einem klassischen Fahrrad, das eine mechanische Verbindung zwischen der Tretkurbelwelle und dem Antriebsrad aufweist, mit einer größeren Massenträgheit und mehr Reibung behaftet, wodurch sich das Pedalieren nicht so leichtgängig anfühlt und vom Benutzer als unkomfortabel empfunden wird. Mit anderen Worten wird, ohne einen Vortrieb am Fahrrad selbst zu generieren, viel Kraft und Energie vom Benutzer benötigt, um den Pedalgenerator selbst in Bewegung zu setzen.

Beispielsweise offenbart die DE 10 2017 213 305 A1 ein zumindest teilweise muskelbetriebenes Fahrzeug mit einer Tretkurbelanordnung, umfassend eine Tretkurbel mit einer Tretachse und eine koaxial um die Tretachse angeordnete Getriebevorrichtung mit einem axial benachbart angeordneten Generator, wobei die Tretkurbel über die Getriebevorrichtung mit dem Generator verbunden ist, um durch die Tretkurbel erzeugte mechanische Energie in elektrische Energie umzuwandeln.

Die Aufgabe der Erfindung besteht darin, eine Antriebseinheit für ein zumindest teilweise mit einer Muskelkraft antreibbares Fahrzeug zu verbessern. Insbesondere soll die Antriebseinheit einen hohen Komfort für den Benutzer bieten. Die Aufgaben werden gelöst durch den Gegenstand von Patentanspruch 1. Bevorzugte Ausführungsformen sind den abhängigen Ansprüchen, der Beschreibung und den Figuren zu entnehmen.

Eine erfindungsgemäße Antriebseinheit für ein zumindest teilweise mit einer Muskelkraft antreibbares Fahrzeug umfasst eine erste elektrische Maschine, die über ein Getriebe mit einer Tretkurbelwelle antriebswirksam verbunden ist, wobei die erste elektrische Maschine dazu eingerichtet ist, mit elektrischer Energie aus einem Energiespeicher als Elektromotor betrieben zu werden, um einen Benutzer beim Pedalieren zu unterstützen, und über die Tretkurbelwelle angetrieben und als Generator betrieben zu werden, um elektrische Energie zum Betrieb einer zweiten elektrischen Maschine, die dazu eingerichtet ist, mit einem Antriebsrad des Fahrzeugs antriebswirksam verbunden zu sein, zu erzeugen.

Mithin ist die erste elektrische Maschine einerseits als Pedalgenerator ausgebildet und dazu eingerichtet, eine Antriebsleistung des Benutzers aufzunehmen, und andererseits als Elektromotor ausgebildet und dazu eingerichtet, die Tretkurbelwelle derart anzutreiben, dass der Benutzer beim Pedalieren entlastet wird. Dadurch wird der Komfort für den Benutzer verbessert. Mit anderen Worten treibt die erste elektrische Maschine nur dann die Tretkurbelwelle an, wenn der Benutzer pedaliert und somit die Tretkurbelwelle rotiert. Beispielsweise bestimmt eine Steuervorrichtung mit mindestens einem Sensor, der zum Erfassen eines Drehwinkels eingerichtet ist, die Drehzahl der Tretkurbelwelle und steuert die beiden elektrischen Maschinen. Insbesondere kann der Sensor einen Drehwinkel an der Tretkurbelwelle, an einer Rotorwelle der ersten elektrischen Maschine oder an einer Getriebewelle erfassen. Beispielsweise ist der Sensor in der ersten elektrischen Maschine oder im Getriebe integriert. Dadurch wird die Montage vereinfacht. Die zweite elektrische Maschine ist als Antriebsmotor zum Antrieb des Antriebsrads eingerichtet und wird nach Maßgabe der vom Benutzer erzeugten Antriebsleistung betrieben.

Vorteilhafterweise ist die Antriebsleistung, die die erste elektrische Maschine in die Tretkurbelwelle einleitet, derart bemessen, dass die Tretkurbelwelle nicht beschleunigt wird, sondern lediglich eine Reibung und Trägheit des Systems an der Tretkurbelwelle verringert werden. Beispielsweise erzeugt die erste elektrische Maschine im Betrieb als Elektromotor zumindest ein Drehmoment, das dem statischen Reibmoment der ersten elektrischen Maschine und des Getriebes entspricht. Alternativ oder ergänzend erzeugt die erste elektrische Maschine im Betrieb als Elektromotor zumindest ein Drehmoment, das einer Rotationsträgheit der ersten elektrischen Maschine und des Getriebes entspricht. Beispielsweise werden das statische Reibmoment der ersten elektrischen Maschine und des Getriebes und/oder die Rotationsträgheit der ersten elektrischen Maschine und des Getriebes vor der Montage empirisch oder durch individuelle Testläufe ermittelt und auf einem Datenspeicher der Steuereinheit hinterlegt. Vorzugsweise ist die Rotationsträgheit der ersten elektrischen Maschine und des Getriebes das Produkt aus der Drehzahl der Tretkurbelwelle und einem Faktor, der größer als 0 und kleiner als 1 ist. Bevorzugt ist dieser Faktor größer als 0 und kleiner als 0,1. Insbesondere ist der Faktor im Wesentlichen abhängig von der Übersetzung und vom Wirkungsgrad des Getriebes, das zwischen der ersten elektrischen Maschine und der Tretkurbelwelle angeordnet ist.

Gemäß einer Ausführungsform ist die erste elektrische Maschine dazu eingerichtet, während eines Pedalumlaufs zumindest teilweise, insbesondere zeitweise, als Elektromotor und zumindest teilweise, insbesondere zeitweise, als Generator betrieben zu werden. Ein Pedalumlauf entspricht dabei einer Umdrehung der Tretkurbelwelle. Gemäß einer Ausführungsform wird die erste elektrische Maschine während eines Pedalumlaufs mehrmals als Elektromotor und mehrmals als Generator betrieben. Insbesondere wird die erste elektrische Maschine während eines Pedalumlaufs abwechselnd als Elektromotor und Generator betrieben. Beispielsweise wird die erste elektrische Maschine im Bereich eines Tretkurbelwinkels von circa 180° und circa 360° bzw. 0° motorisch betrieben, weil der Hebelarm zum Aufbringen einer Trittkraft auf die Pedalen in dieser vertikalen Ausrichtung der mit der Tretkurbelwelle drehfest verbundenen Tretkurbeln minimal ist und dadurch Reibungswiderstände für den Benutzer besonders deutlich spürbar sind. Dementsprechend wird die erste elektrische Maschine im Bereich eines Tretkurbelwinkels von circa 90° und circa 270° generatorisch betrieben, weil der Hebelarm zum Aufbringen einer Trittkraft auf die Pedalen in dieser horizontalen Ausrichtung der mit der Tretkurbelwelle drehfest verbundenen Tretkurbeln maximal ist und ein Antriebsdrehmoment des Benutzers abgestützt werden muss.

Die Erfindung betrifft auch ein Verfahren zum Betrieb einer erfindungsgemäßen Antriebseinheit, wobei die erste elektrische Maschine mit elektrischer Energie aus dem Energiespeicher als Elektromotor betrieben wird, um den Benutzer beim Pedalieren zu unterstützen, und über die Tretkurbelwelle angetrieben und als Generator betrieben wird, um elektrische Energie zum Betrieb der zweiten elektrischen Maschine zu erzeugen. Die Unterstützung des Benutzers beim Pedalieren ist dabei derart bemessen, dass Widerstände des Systems an der Tretkurbelwelle verringert werden. Beispielsweise erzeugt die erste elektrische Maschine während des Betriebs als Elektromotor ein Drehmoment, das der Summe aus einer Rotationsträgheit und eines statischen Reibmoments der ersten elektrischen Maschine und des Getriebes entspricht.

Die folgende Gleichung verdeutlicht das zuvor gesagte: Erzeugtes Drehmoment an der ersten elektrischen Maschine = Rotationsträgheit der ersten elektrischen Maschine und des Getriebes + statisches Reibmoment der ersten elektrischen Maschine und des Getriebes. Die Rotationsträgheit der ersten elektrischen Maschine und des Getriebes kann durch Multiplikation der Drehzahl der Tretkurbelwelle und einem Faktor zwischen 0 und 1 berechnet werden.

Ferner wird im Generatorbetrieb das Drehmoment des Benutzers an der Tretkurbelwelle abgestützt. Durch beide Maßnahmen wird über die erste elektrische Maschine ein Rotationswiderstand an der Tretkurbelwelle aktiv eingestellt, um ein klassisches Pedaliergefühl für den Benutzer zu simulieren. Ferner werden über die erste elektrische Maschine Fahrbefehle für den Betrieb der zweiten elektrischen Maschine aufgenommen. Insbesondere wird dazu der mindestens eine in der ersten elektrischen Maschine integrierte Sensor zum Erfassen eines Drehwinkels verwendet.

Die Erfindung betrifft auch ein Fahrzeug, das zumindest teilweise mit einer Muskelkraft antreibbar ist, umfassend zumindest zwei Räder und eine erfindungsgemäße Antriebseinheit. Insbesondere ist das Fahrzeug als E-Bike ausgebildet. Beispielsweise kann das Fahrzeug drei oder mehrere Räder aufweisen, wobei entweder ein Rad oder mehrere Räder elektrisch angetrieben werden können.

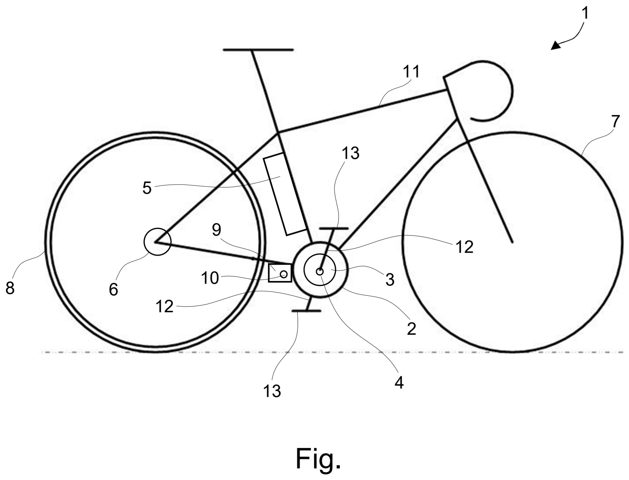

Weitere die Erfindung verbessernde Maßnahmen werden nachstehend gemeinsam mit der Beschreibung eines bevorzugten Ausführungsbeispiels der Erfindung anhand der einzigen Figur näher dargestellt, wobei diese eine stark vereinfachte schematische Darstellung eines erfindungsgemäßen Fahrzeugs mit einer erfindungsgemäßen Antriebseinheit zeigt.

Das erfindungsgemäße Fahrzeug 1 ist als E-Bike ausgebildet und zumindest teilweise mit einer Muskelkraft antreibbar. Das Fahrzeug 1 umfasst ein als Antriebsrad 8 ausgebildetes Hinterrad, ein Vorderrad 7, das über eine Gabel schwenkbar an einem Rahmen 11 angeordnet ist, und eine erfindungsgemäße Antriebseinheit mit einer ersten elektrischen Maschine 2 und einer zweiten elektrischen Maschine 6.

Eine Tretkurbelwelle 4 ist über Tretkurbeln 12 mit Pedalen 13 verbunden, wobei die als Pedalgenerator eingerichtete erste elektrische Maschine 2, antriebswirksam über ein Getriebe 3 mit der Tretkurbelwelle 4 verbunden ist. Die als Radnabenmotor ausgebildete zweite elektrische Maschine 6 ist über ein nicht näher dargestelltes schaltbares Planetengetriebe antriebswirksam mit dem Antriebsrad 8 des Fahrzeugs 1 verbunden, um nach Maßgabe einer an der Tretkurbelwelle 4 vom Benutzer erzeugten Antriebsleistung eine Antriebsleistung am Antriebsrad 8 zu erzeugen. Eine Steuervorrichtung 9 mit einem Sensor 10 zum Erfassen eines Drehwinkels ist dazu eingerichtet, die Drehzahl der Tretkurbelwelle 4 zu bestimmen und die beiden elektrischen Maschinen 2, 6 zu steuern. Ein elektrischer Energiespeicher 5 ist am Rahmen 11 des Fahrzeugs 1 angeordnet und mit den beiden elektrischen Maschinen 2, 6 und der Steuervorrichtung 9 elektrisch verbunden.

Die erste elektrische Maschine 2 ist dazu eingerichtet, mit elektrischer Energie aus einem Energiespeicher 5 als Elektromotor betrieben zu werden, um einen Benutzer beim Pedalieren zu unterstützen, und über die Tretkurbelwelle 4 angetrieben und als Generator betrieben zu werden, um elektrische Energie zum Betrieb der zweiten elektrischen Maschine 6 zu erzeugen. Insbesondere wird die erste elektrische Maschine 2 während eines Pedalumlaufs mehrmals abwechselnd als Elektromotor und Generator betrieben. Im Betrieb als Elektromotor erzeugt die erste elektrische Maschine 2 ein Drehmoment, das der Summe eines statischen Reibmoments und einer Rotationsträgheit der ersten elektrischen Maschine 2 und des Getriebes 3 entspricht, wobei die Rotationsträgheit der ersten elektrischen Maschine 2 und des Getriebes 3 das Produkt aus der Drehzahl der Tretkurbelwelle 4 und einem Faktor, der größer als 0 und kleiner als 1, insbesondere kleiner als 0,1 ist, entspricht.

Wenn der Energiespeicher 5 entladen ist, können die beiden elektrischen Maschinen 2, 7 nicht mehr mit elektrischer Energie versorgt werden. Ab diesem Zeitpunkt muss der Benutzer stärker pedalieren, um auch das Reibmoment und die Rotationsträgheit der ersten elektrischen Maschine 2 und des Getriebes 3 zu überwinden. Die erste elektrische Maschine 2 erzeugt dann ausschließlich die elektrische Energie, die zum Betrieb der zweiten elektrischen Maschine 6 vorgesehen ist. Beispielsweise reicht die von der ersten elektrischen Maschine 2 im Generatorbetrieb erzeugte elektrische Energie aus, um innerhalb von 10 Minuten eine Strecke von 300 Metern allein durch den Pedalantrieb des Benutzers zurückzulegen.

### Bezugszeichenliste

- 1: Fahrzeug
- 2: erste elektrische Maschine
- 3: Getriebe
- 4: Tretkurbelwelle
- 5: Energiespeicher
- 6: zweite elektrische Maschine
- 7: Vorderrad
- 8: Antriebsrad
- 9: Steuervorrichtung
- 10: Sensor
- 11: Rahmen
- 12: Tretkurbel
- 13: Pedale

## Patentansprüche

1. Antriebseinheit für ein zumindest teilweise mit einer Muskelkraft antreibbares Fahrzeug (1), aufweisend eine erste elektrische Maschine (2), die über ein Getriebe (3) mit einer Tretkurbelwelle (4) antriebswirksam verbunden ist, wobei die erste elektrische Maschine (2) dazu eingerichtet ist, mit elektrischer Energie aus einem Energiespeicher (5) als Elektromotor betrieben zu werden, um einen Benutzer beim Pedalieren zu unterstützen, und über die Tretkurbelwelle (4) angetrieben und als Generator betrieben zu werden, um elektrische Energie zum Betrieb einer zweiten elektrischen Maschine (6), die dazu eingerichtet ist, mit einem Antriebsrad (8) des Fahrzeugs (1) antriebswirksam verbunden zu sein, zu erzeugen.

2. Antriebseinheit nach Anspruch 1,
**dadurch gekennzeichnet, dass** eine Steuervorrichtung (9) mit mindestens einem Sensor (10) zum Erfassen eines Drehwinkels dazu eingerichtet ist, die Drehzahl der Tretkurbelwelle (4) zu bestimmen und die beiden elektrischen Maschinen (2, 6) zu steuern.

3. Antriebseinheit nach einem der vorhergehenden Ansprüche,
**dadurch gekennzeichnet, dass** die erste elektrische Maschine (2) dazu eingerichtet ist, während eines Pedalumlaufs zumindest teilweise als Elektromotor und zumindest teilweise als Generator betrieben zu werden.

4. Antriebseinheit nach einem der vorhergehenden Ansprüche,
**dadurch gekennzeichnet, dass** die erste elektrische Maschine (2) im Betrieb als Elektromotor zumindest ein Drehmoment erzeugt, das dem statischen Reibmoment der ersten elektrischen Maschine (2) und des Getriebes (3) entspricht.

5. Antriebseinheit nach einem der vorhergehenden Ansprüche,
**dadurch gekennzeichnet, dass** die erste elektrische Maschine (2) im Betrieb als Elektromotor zumindest ein Drehmoment erzeugt, das einer Rotationsträgheit der ersten elektrischen Maschine (2) und des Getriebes (3) entspricht.

6. Antriebseinheit nach Anspruch 5,
**dadurch gekennzeichnet, dass** die Rotationsträgheit der ersten elektrischen Maschine (2) und des Getriebes (3) das Produkt aus der Drehzahl der Tretkurbelwelle (4) und einem Faktor, der größer als 0 und kleiner als 1 ist, entspricht.

7. Antriebseinheit nach Anspruch 6,
**dadurch gekennzeichnet, dass** der Faktor größer als 0 und kleiner als 0,1 ist.

8. Verfahren zum Betrieb einer Antriebseinheit nach einem der vorhergehenden Ansprüche, wobei die erste elektrische Maschine (2) mit elektrischer Energie aus dem Energiespeicher (5) als Elektromotor betrieben wird, um den Benutzer beim Pedalieren zu unterstützen, und über die Tretkurbelwelle (4) angetrieben und als Generator betrieben wird, um elektrische Energie zum Betrieb der zweiten elektrischen Maschine (6) zu erzeugen.

9. Verfahren nach Anspruch 8,
**dadurch gekennzeichnet, dass** die erste elektrische Maschine (2) während des Betriebs als Elektromotor ein Drehmoment erzeugt, das der Summe aus einer Rotationsträgheit und eines statischen Reibmoments der ersten elektrischen Maschine (2) und des Getriebes (3) entspricht.

10. Fahrzeug (1), das zumindest teilweise mit einer Muskelkraft antreibbar ist, umfassend zumindest zwei Räder und eine Antriebseinheit gemäß einem der Ansprüche 1 bis 7.
